# EUROPEAN PATENT SPECIFICATION

(11) **EP 4 593 991 B1**
(45) Date of publication and mention of the grant of the patent: **26.11.2025**
(21) Application number: 24794888.8
(22) Date of filing: 18.10.2024
(51) Int. Cl.: B01D 53/94, B01J 23/42, B01J 23/44, B01J 23/52, B01J 35/00, B01J 35/57, B01J 37/02, B01J 37/08, F01N 3/10, F01N 3/28

(54) **OXIDATION CATALYST FOR TREATING EMISSIONS FROM AN INTERNAL COMBUSTION ENGINE RUN ON HYDROGEN FUEL**
OXIDATIONSKATALYSATOR ZUR BEHANDLUNG VON EMISSIONEN AUS EINEM MIT WASSERSTOFF BETRIEBENEN VERBRENNUNGSMOTOR
CATALYSEUR D'OXYDATION POUR LE TRAITEMENT DES ÉMISSIONS D'UN MOTEUR À COMBUSTION INTERNE FONCTIONNANT AVEC DE L'HYDROGÈNE COMBUSTIBLE

(30) Priority: 18.10.2023 US 202363591123 P; 13.02.2024 EP 24157289
(43) Date of publication of application: 06.08.2025
(73) Proprietor: Johnson Matthey Public Limited Company, London EC2V 7AD (GB)
(72) Inventor: CORPS, Jack, Royston Hertfordshire SG8 5HE (GB); MOREAU, Francois Pierre Henri, Royston Hertfordshire SG8 5HE (GB); O'BRIEN, Matthew, Royston Hertfordshire SG8 5HE (GB); YAMMINE, Elham, Royston Hertfordshire SG8 5HE (GB)
(74) Representative: Johnson Matthey Plc
(86) International application number: PCT/GB2024/052684
(87) International publication number: WO 2025/083425

(56) References cited:
- EP-A1- 4 279 175
- CN-A- 115 555 044
- US-A1- 2023 287 822

## Description

### FIELD OF THE INVENTION

The present invention relates to a catalyst for oxidizing H₂ to H₂O and optionally also NO to NO₂, in exhaust gas of an internal combustion engine run on a mixture of air and fuel, wherein the fuel of the mixture of air and fuel is a gaseous fuel comprising at least 95 vol% H₂.

### BACKGROUND OF THE INVENTION

Hydrogen has been proposed as an alternative fuel for internal combustion engines due to potential use as a renewable carbon-free energy carrier.

Emissions from hydrogen internal combustion engines ("H₂-ICE") may include nitrogen-based emissions (i.e., oxides of nitrogen (NOₓ)) and unburned hydrogen, and therefore such engines need exhaust aftertreatment for NOₓ and hydrogen. Additionally, it is anticipated that filtration of particulates derived from engine oil ash and urea particulates (PM10) may also be required.

Traditional methods of oxidizing H₂ often result in undesired N₂O production - a powerful greenhouse gas, particularly when the catalyst is exposed to relatively high levels of H₂. Further, the oxidation performance of typical catalyst technology can be relatively poor under relatively low H₂ levels. This may particularly be the case for Pt and/or Pd technology with sluggish light-off. It is therefore an object of the present invention to provide a system comprising a hydrogen-combusting engine with improved exhaust emissions including technology that is effective under a wide range of H₂ conditions.

It is believed that exhaust systems for on-road vehicles including internal combustion engines powered by hydrogen fuel will require at least a hydrogen oxidation catalyst to treat hydrogen emissions in the exhaust gas thereof. It is expected that for all on-road vehicles and for non-road vehicles having a power rating >56kW some form of catalytic NOx reduction may also be required. It is also believed that non-road vehicles having a power rating of <56kW may be calibrated in such a way that no aftertreatment catalysis is required, or - depending again on the engine calibration - a hydrogen oxidation catalyst only and no catalytic NOx reduction. However, all on-road and non-road vehicles may require a particulate filter somewhere in the system to capture engine lubricant-derived ash and - if catalytic NOx reduction requiring a nitrogenous reductant is used - PM10 particulates of urea ammonia precursor injected into the exhaust gas upstream of a NOx reduction catalyst.

Applicant's WO2012/120292 discloses a method of making a supported catalytic species comprising an alloy of at least two metals comprising the steps of: (i) combining a particulate support material, a solution of a first metal compound, a solution of a second metal compound, and a solution of an alkaline precipitating agent to form a slurry mixture; (ii)agitating the resultant mixture; and (iii)contacting the solids with a reducing agent. In preferred, exemplified embodiments, the first metal in the first metal compound is gold and the second metal in the second metal compound is palladium.

US patent publication no. 2023/287822 A1 discloses an emission treatment system comprising an oxidation catalyst composition in fluid communication with an exhaust gas stream emitted from an engine that combusts both hydrocarbon fuel and hydrogen; and optionally, at least one selective catalytic reduction (SCR) composition and/or at least one three-way conversion (TWC) catalyst composition, combustion systems comprising the same; and a method of treating an exhaust gas stream, such as, e.g., an exhaust gas produced by combusting hydrogen fuel during a cold-start period, using the emission treatment system.

Chinese patent no. 115555044B discloses a preparation method of a catalyst for NOx pollutants of a hydrogen internal combustion engine. The preparation method comprises the steps of: (1) preparing a supported material containing 0.3-0.8% by mass of noble metal; (2) coating with a molecular sieve; and (3) calcining.

EP4279175A1 discloses a hydrogen oxidation catalyst and exhaust gas treatment systems comprising the hydrogen oxidation catalysts in combination with other catalysts designed to treat exhaust gas. The hydrogen oxidation catalyst is positioned in an upstream position and is capable of increasing the downstream temperature to provide enhanced NOₓ removal and decreased N₂O emissions relative to comparable exhaust gas treatment systems.

The present inventors have surprisingly found a hydrogen oxidation catalyst that provides excellent hydrogen conversion under a wide range of H₂ conditions while producing relatively minimal N₂O. Desirably, the hydrogen oxidation catalyst is also active for oxidizing NO to NO₂.

### SUMMARY OF THE INVENTION

According to certain aspects of the present invention, an apparatus comprises an internal combustion engine configured to run on a mixture of air and fuel, wherein the fuel of the mixture of air and fuel is a gaseous fuel comprising at least 95 vol% H₂, a source of gaseous fuel comprising at least 95 vol% H₂ and an exhaust system comprising a catalytic aftertreatment component, wherein the catalytic aftertreatment component comprises a catalyst composition comprising palladium and gold on a metal oxide support. In some aspects, at least some of the palladium and gold is present as an alloy.

The palladium and gold may be present in the catalyst composition in a weight ratio of Au:Pd of from 9:1 to 1:9, from 5:1 to 1:5, from 3:1 to 1:3, from 4:1 to 1:2, from 3:1 to 1:2, or from 2:1 to 1:2. In certain aspects, the palladium and gold are present in the catalyst composition in a weight ratio of Au:Pd of from 1:1.1 to 1:9, from 1:1.1 to 1:5, from 1:1.1 to 1:3, or from 1:1.1 to 1:2. The Au and Pd may be present in the catalyst composition in a combined amount of from 0.5 to 10.0 wt%, or from 1.0 to 5.0 wt%.

The catalyst composition may further include platinum. The platinum may be located on a separate and distinct metal oxide support from the palladium and gold and/or the metal oxide support containing platinum may also contain palladium.

In some aspects, the gold and palladium on a first metal oxide support and the platinum and optional palladium on a second metal oxide support are disposed in a same washcoat layer. In some aspects, the platinum and optional palladium on a second metal oxide support is disposed in a layer under an overlayer comprising the palladium and gold on a first metal oxide support.

The catalytic aftertreatment component may comprise a substrate monolith having an upstream zone and a downstream zone, relative to a flow of exhaust gas, wherein the platinum and optional palladium on a second metal oxide support is located in the upstream zone and the gold and palladium on a first metal oxide support is located in the downstream zone.

In some aspects, the catalytic aftertreatment component comprises a substrate monolith having an upstream zone and a downstream zone, relative to a flow of exhaust gas, wherein the platinum and optional palladium on a second metal oxide support is located in the downstream zone and the gold and palladium on a first metal oxide support is located in the upstream zone.

In some aspects, the substrate monolith may be a flow-through substrate. In some aspects, the substrate monolith may be a wall-flow filter.

According to some aspects, the exhaust system comprises a catalyst for selectively reducing NO and NO₂ to N₂ disposed downstream from the catalytic aftertreatment component, an injector for injecting a nitrogenous reductant into exhaust gas between the catalytic aftertreatment component and the catalyst for selectively reducing NO and NO₂ to N₂ and a reservoir of nitrogenous reductant. The nitrogenous reductant is preferably ammonia, optionally derived from urea. Suitable catalysts for selectively reducing NO and NO₂ to N₂ are known in the art as SCR catalysts. In some aspects, the exhaust system comprises an ammonia slip catalyst disposed downstream from the catalyst for selectively reducing NO and NO₂ to N₂. The exhaust system may further comprise a filter for filtering ash derived from engine oil from the exhaust gas, optionally disposed between the catalytic aftertreatment component and the injector for injecting a nitrogenous reductant into exhaust gas.

According to some aspects of the present invention, a method of converting hydrogen to H₂O and optionally also NO to NO₂ in exhaust gas from an internal combustion engine running on a mixture of air and fuel, wherein the fuel in the mixture of air and fuel comprises at least 95 vol% H₂, comprises passing exhaust gas from the engine through a hydrogen oxidation catalyst comprising palladium and gold on a metal oxide support. In some aspects, exhaust gas containing a mixture of NO and NO₂ derived from oxidation of NO is mixed with a nitrogenous reductant and passed over a catalyst for selectively reducing NO and NO₂ to N₂. In some aspects, the nitrogenous reductant is ammonia (NH₃), optionally derived from a urea ammonia precursor.

### BRIEF DESCRIPTION OF DRAWINGS

Figure 1 shows H₂ conversion of inventive and comparative catalysts;
Figure 2 shows N₂O production of inventive and comparative catalysts during the test of Figure 1;
Figure 3 shows NO₂/NOₓ ratio of inventive and comparative catalysts during the test of Figure 1;
Figure 4 shows H₂ conversion of inventive and comparative catalysts of Example 2, gas mixture 1 in Table 2;
Figure 5 shows N₂O production of inventive and comparative catalysts of Example 2, gas mixture 1 in Table 2;
Figure 6 shows NO₂/NOₓ ratio of inventive and comparative catalysts of Example 2, gas mixture 1 in Table 2;
Figure 7 shows H₂ conversion of inventive and comparative catalysts of Example 2, gas mixture 2 in Table 2;
Figure 8 shows N₂O production of inventive and comparative catalysts of Example 2, gas mixture 2 in Table 2;
Figure 9 shows NO₂/NOₓ ratio of inventive and comparative catalysts of Example 2, gas mixture 2 in Table 2;
Figure 10 shows H₂ conversion of inventive and comparative catalysts of Example 2, gas mixture 3 in Table 2;
Figure 11 shows N₂O production of inventive and comparative catalysts of Example 2, gas mixture 3 in Table 2;
Figure 12 shows NO₂/NOₓ ratio of inventive and comparative catalysts of Example 2, gas mixture 3 in Table 2;
Figure 13 shows H₂ conversion of inventive and comparative catalysts in gas mixture 2;
Figure 14 shows H₂ conversion of inventive and comparative catalysts in gas mixture 4;
Figure 15 shows H₂ conversion of inventive and comparative catalysts in gas mixture 1; and
Figure 16 shows H₂ conversion of inventive and comparative catalysts in gas mixture 5.

In the Figures, "V&F" is a reference to the name of the company who supply the relevant detector. "MX" is short for "Mexa", which is a Horiba analytical instrument.

### DETAILED DESCRIPTION OF THE INVENTION

Apparatuses, systems, and catalysts of the present invention are related to an exhaust system for a hydrogen internal combustion engine ("H₂-ICE"). Such exhaust system may comprise one or more catalytic aftertreatment components. Such system may be used in a mobile application, such as a vehicle, or a stationary application, such as a power generation unit.

H₂-ICE exhaust includes H₂, which needs to be oxidized before the exhaust is released to the atmosphere, and oxides of nitrogen (NOₓ). Traditional methods of oxidizing H₂ often result in undesired N₂O production. It has surprisingly been found that systems and catalysts according to the present invention provide excellent H₂ oxidation while producing minimal N₂O.

Accordingly, embodiments of the present invention provide an apparatus comprising a H₂-ICE and an exhaust system comprising one or more catalytic aftertreatment component, wherein one or more catalytic aftertreatment component comprises a catalyst composition comprising palladium and gold on a metal oxide support. In some aspects, at least some of the palladium and gold is present as an alloy.

The weight ratio of Au:Pd in the catalyst composition can be from 9:1 to 1:9, such as from 5:1 to 1:5, from 3:1 to 1:3, from 4:1 to 1:2, from 3:1 to 1:2, from 2:1 to 1:2, from 1:1 to 9:1, from 1:1 to 1:9; from 1:1 to 5:1, from 1:1 to 1:5, from 1:1 to 3:1, from 1:1 to 1:3, from 1:1 to 1:2, or from 1:1 to 2:1. In some aspects, the catalyst composition has more Pd than Au, such as, a weight ratio of Au:Pd of 1:1.1 to 1:9, from 1:1.1 to 1:5, from 1:1.1 to 1:3, or from 1:1.1 to 1:2. In some aspects, the catalyst composition has more Au than Pd, such as, a weight ratio of Au:Pd of 1.1:1 to 9:1, from 1.1:1 to 5:1, from 1.1:1 to 4:1, from 1.1:1 to 3:1, or from 1.1:1 to 2:1.

In some aspects, Au and Pd are present in the catalyst composition in a combined amount of from 0.1 to 10.0 wt%; from 0.1 to 5.0 wt%; from 0.2 to 10.0 wt%; from 0.2 to 5.0 wt%; from 0.3 to 10.0 wt%; from 0.3 to 5.0 wt%; from 0.4 to 10.0 wt%; from 0.4 to 5.0 wt%; from 0.5 to 10.0 wt%; from 0.5 to 5.0 wt%; or from 1.0 to 5.0 wt% of the catalyst composition.

In some aspects, a catalytic aftertreatment component may further comprise platinum. In some aspects, the platinum is located on a separate and distinct metal oxide support from the palladium and gold. In some aspects, the platinum may be combined with palladium. Platinum may be included in any suitable amount as appropriate for the context such as, for example, the quantity of NO to be converted to NO₂ for downstream SCR conversion. In some aspects platinum may be included in an amount of from 0.0353 to 1.77 g/L (1 to 50 g/ft³), 0.0353 to 3.53 g/L (1 to 100 g/ft³), 0.0353 to 5.30 g/L (1 to 150 g/ft³), or 0.0353 to 7.06 g/L (1 to 200 g/ft³).

Suitable metal oxide supports are known in the art and may include, for example, alumina, doped alumina such as alumina doped with W and/or Si, titania, doped titania such as titania doped with W and/or Si, ceria, ceria zirconia mixed oxide, ZrO₂, and/or SnO₂. Preferably, however, the metal oxide support in the catalyst composition does not comprise ceria or ceria-zirconia.

A catalytic aftertreatment component may be prepared by coating a substrate monolith with one or more washcoat containing a catalyst composition. In some aspects, one or more washcoat may be coated and/or layered along varying lengths of the substrate monolith in a manner to create zones. A substrate monolith may have, for example, an upstream zone and a downstream zone, relative to the flow of exhaust gas.

In some aspects, gold and palladium are on a first metal oxide support and platinum (and optional palladium) is on a second metal oxide support and both are disposed in the same washcoat layer. In some aspects, platinum (and optional palladium) on a second metal oxide support is located in a zone of a substrate monolith upstream of a zone comprising the gold and palladium on a first metal oxide support. In some aspects, platinum (and optional palladium) on a second metal oxide support is located in a zone of a substrate monolith downstream of a zone comprising gold and palladium on a first metal oxide support. In some aspects, platinum (and optional palladium) on a second metal oxide support is disposed in a layer under an overlayer comprising palladium and gold on a first metal oxide support. The overlayer may completely or partially cover the layer beneath. Preferably, the catalyst composition is substantially devoid of rhodium. Further preferably the metal oxide support in the catalyst composition does not comprise a zeolite.

The substrate monolith may have an inlet end and an outlet end. The upstream zone may extend from the inlet end toward the outlet end, extending about 10%-95%, about 20%-80%, about 30%-70%, about 40%-60%, or about 40%-70% of the axial length of the substrate monolith. The downstream zone may extend from the outlet end toward the inlet end, extending about 10%-95%, about 20%-80%, about 30%-70%, about 40%-60% of the axial length of the substrate monolith.

The substrate monolith can be a honeycomb flow-through monolith, either metallic or ceramic, or a filter. The filter can be full filter, e.g. a so-called wall-flow filter, or a partial filter.

Catalyst compositions, washcoats, and catalyst components of the present invention may be prepared by any suitable means known by one of skill in the art.

In order that the invention may be more fully understood, the following Examples are provided by way of illustration only.

### EXAMPLES

### Example 1

Catalysts were prepared with the following formulations:
- AuPd on Al₂O₃ at 2.19 g/L (60 g/ft³) with Au:Pd in a weight ratio of 1.25:1, i.e. 33.3:26.7;
- Pd on 5wt% Si-doped Al₂O₃ at 1.77 g/L (50 g/ft³);
- Pt on 5wt% Si-doped Al₂O₃ at 1.77 g/L (50 g/ft³).

AuPd was prepared according to Applicant's WO2012/120292, Example 1A, Reference B. A dry preformed AuPd powder containing the desired amount and Precious Metal ratio on the desired metal oxide was slurried in water and milled to a desired particle size. A bare alumina diluent can be added to improve coatability, as required. The slurry was then thickened to a suitable level and coated onto a flow-through monolith substrate. The washcoated substrate was then dried at 100°C before being calcined at 500°C.

Pt or Pd Preparation: The silica-doped alumina powder is slurried in water and ground to a desired size. An appropriate amount of soluble platinum or palladium salt was added to achieve the intended loading (g/L (g/ft³)). The resulting washcoat was applied using conventional coating techniques, e.g. as disclosed in Applicant's WO99/047260A1, to the entire axial length of a flow-through monolith substrate. The monolith substrate coated with catalyst composition was then dried at 100°C and finally calcined at 500°C.

A cylindrical core was cut from each substrate coated with a catalyst composition. Each coated substrate was then hydrothermally aged at 650°C in a constantly replenished gas mixture of 20 vol% water/compressed air for 50 hours (equivalent to 20% O₂) controlled by mass flow and liquid flow controllers respectively was pumped into the oven box at a flow rate of 5 litres per minute. The substrate cores were arranged within the oven box so that the channels extended vertically and the flowing gas mixture was forced to enter the channels of each core disposed within the oven box from a lower end thereof.

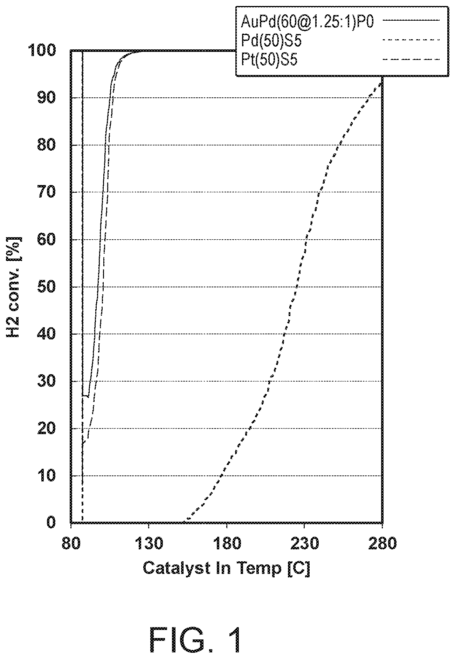

The catalytic activity for each core was determined using a synthetic gas laboratory catalytic activity test (SCAT) apparatus. The aged cores were tested using a temperature ramp 80°C to 500°C at 20°C per minute in a simulated exhaust gas mixture comprising 5000 ppm H₂, 500 ppm NO, 13 vol% H₂O, 4 vol% O₂, the balance nitrogen (N₂). The swept volume was 80,000 hr⁻¹. Two successive ramp tests were conducted and the catalyst activity on the second "ramp" is reported hereinbelow. Between each ramp test, the catalyst core sample was allowed to cool to 80°C. Tests were conducted for H₂ conversion, N₂O production (detected by a Fourier-transform infra-red (FTIR) spectroscopic instrument), and NO₂/NOx ratio (%). The results are shown in Figures 1 to 3.

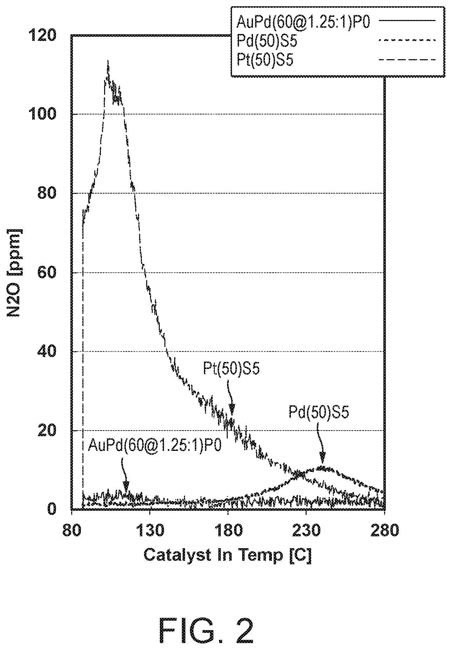

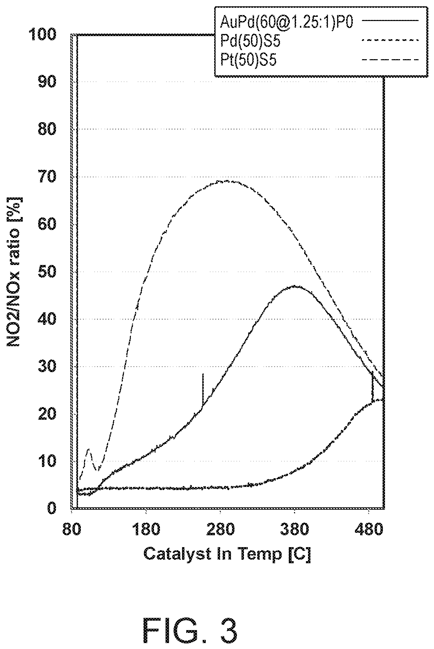

Figure 1 demonstrates that the AuPd catalyst composition provides similar H₂ conversion to that of the Pt-only catalyst composition and far superior to the Pd-only catalyst composition. Figure 2 shows that the AuPd catalyst composition provides an advantage over the Pt-only catalyst composition as the AuPd catalyst composition produced corresponding negligible amounts of N₂O during the H₂-conversion test. Figure 3 demonstrates that the Au:Pd catalyst composition produces some NO₂/NOx which is better than the Pd-only catalyst composition (the other formulation that does not make significant N₂O). This effect could be advantageous for systems requiring downstream SCR catalytic reduction of NOx using a nitrogenous reductant such as ammonia or its precursor urea.

### Example 2 - Varying Total AuPd Loadings

Several flow-through monolith substrates coated with different AuPd catalyst compositions were prepared similarly to Example 1 with varying Precious Metal loadings, as detailed in Table 1 below.

A stock dry pre-formed powder AuPd supported on gamma-alumina of 1.25:1 weight ratio Au:Pd was slurried in water and milled to the correct particle size. To this slurry was added the indicated quantity of bare 3.5wt% lanthanum-doped alumina to create a slurry at the desired washcoat loading. The bare 3.5wt% lanthanum-doped alumina was added as a diluent to make the washcoat as a whole more coatable; washcoating of, e.g., only 9.76 g/L (0.16 g/in³) AuPd gamma-alumina is difficult. A quantity of the stock AuPd pre-formed powder was selected to achieve the desired total AuPd loading indicated in Table 1 below. The slurry was then thickened to a suitable level and coated on the monolith substrate using the conventional coating technique described in Example 1. The monolith containing the coated slurry was then dried at 100°C before being calcined at 500°C.

For the purposes of comparison, a zone-coated Sample 5 was also prepared in which 50% of an inlet axial length of a monolith substrate was coated with the composition of Sample 4; and 50% of an outlet axial length of the monolith substrate was coated with a platinum supported on 85.4 g/L (1.4g/in³) 5wt% silica-doped alumina at a Pt loading of 0.353 g/L (10 g/ft³). The total precious metal loading, i.e. Pt+Au+Pd, on the zone-coated Sample 5 was 0.353 g/L (10g/ft³) and so the results can be compared with the results for Sample 3 and 4.

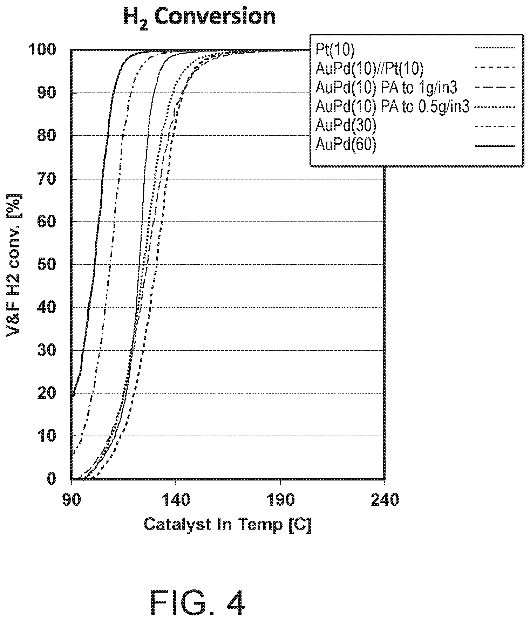

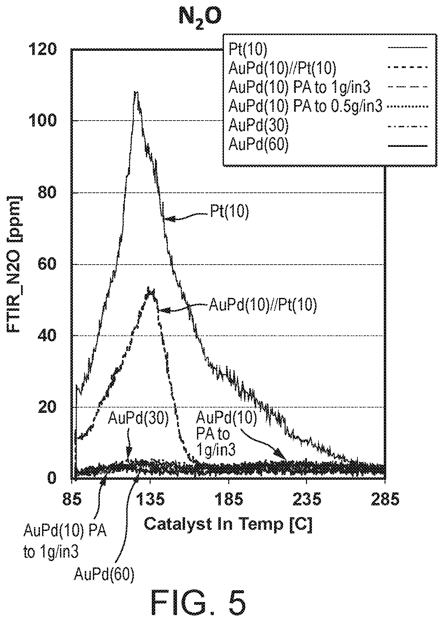

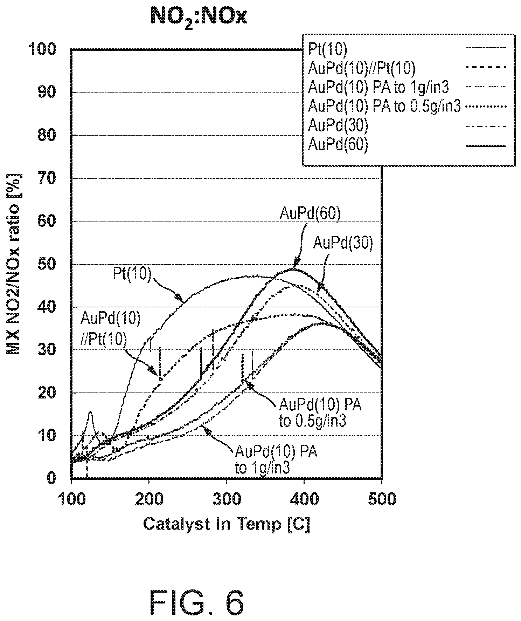

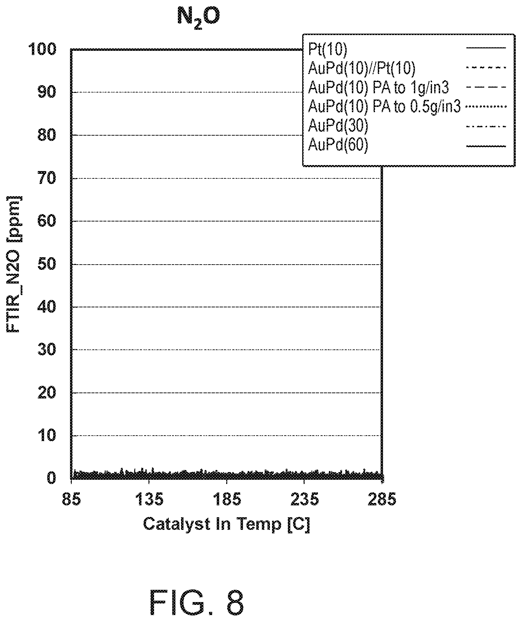

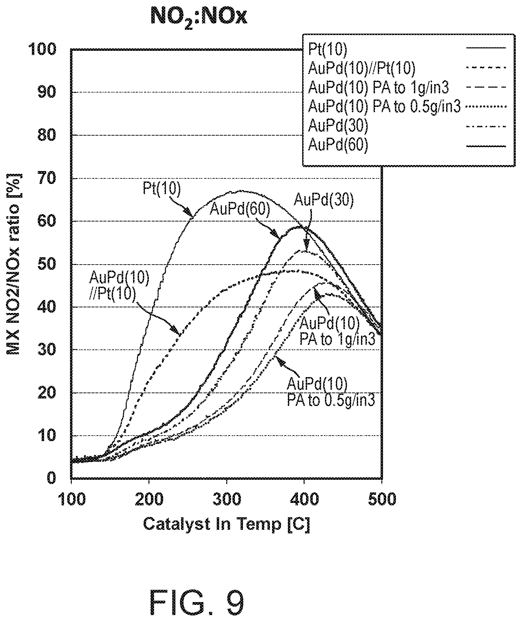

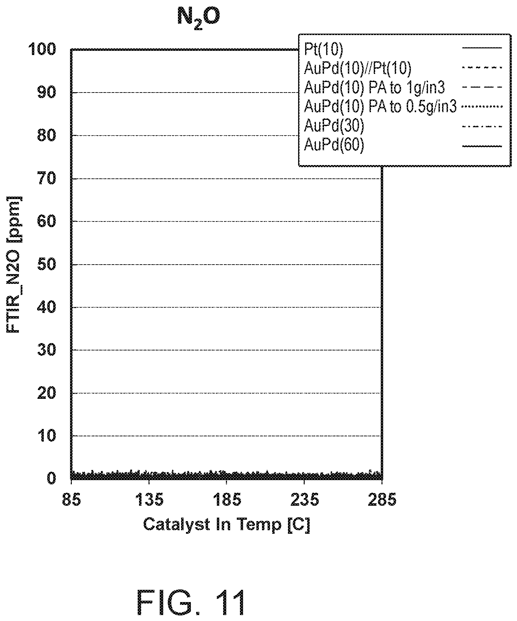

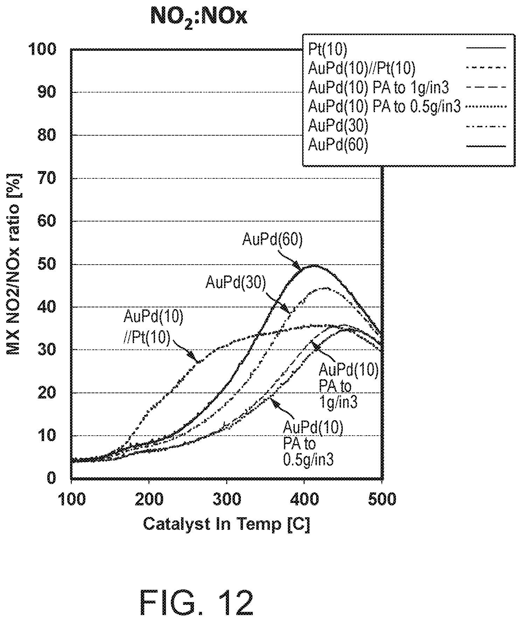

Cores of the catalyst-coated substrates were cut and the cut cores were hydrothermally aged as described in Example 1 above and, as was also done in Example 1, the calcined cores were tested using a SCAT apparatus for H₂ oxidation activity, N₂O and NO oxidation, but using one of gas mixtures 1, 2 and 3. Gas mixtures 1, 2 and 3 have the same composition as that used in Example 1 above, but with variations in swept volume and/or H₂ (ppm) and NO (ppm) as indicated in table 2. The results are shown in Figures 4 to 12 inclusive.

**Table 1 - Formulation of Samples 1-5 having differing AuPd loadings**

| **Sample** | **Total AuPd Loading** | **3.5wt% lanthanum-doped alumina in washcoat** | **Total washcoat loading (g/in³)** |
|---|---|---|---|
| 1 | 2.19 g/l = 57.4 g/L (60 g/ft³ = 0.94 g/in³) | 0.1 | 1.04 |
| 2 | 1.06 g/L = 28.7 g/L (30 g/ft³ = 0.47 g/in³) | 0.1 | 0.57 |
| 3 | 0.353 g/L = 9.76 g/L (10 g/ft³ = 0.16 g/in³) | 0.34 | 0.50 |
| 4 | 0.353 g/L = 9.76 g/L (10 g/ft³ = 0.16 g/in³) | 0.84 | 1.00 |
| 5 | 50% *0.353 g/L (*10 g/ft³) = 9.76 g/L (0.16 g/in³)//50% 0.353 g/L (10g/ft³) Pt/5wt% | 0.84 (combined with the AuPd/gamma alumina) | 1.00 |
| | silica-doped alumina = 85.4 g/L (1.4 g/in³) | | |

| | | | |
|---|---|---|---|
| * It will be appreciated that a substrate coated 50% of its axial length with AuPd at 0.353 g/L (10g/ft³) has a total AuPd on 100% axial length, i.e. taking into account the additional substrate volume, of 0.177 g/L (5g/ft³). Using the same logic, the total loading of Pt on the substrate coated to 50% of the substrate axial length with 0.353 g/L (10 g/ft³) Pt/5wt% silica-doped alumina is also 0.177 g/L (5 g/ft³). Accordingly, the total precious metal loading of Pt+Au+Pd on the substrate as a whole is 0.177 + 0.177 = 0.353 g/L (5 + 5 = 10 g/ft³). | | | |

**Table 2 - Test conditions:**

| **Gas Mixture No.** | **Swept Volume (SV) (hr⁻¹)** | **H₂ (ppm)** | **NO (ppm)** | **O₂ (vol%)** | **H₂O (vol%)** |
|---|---|---|---|---|---|
| 1 | 80,000 | 5000 | 500 | 14 | 13 |
| 2 | 80,000 | 200 | 100 | 14 | 13 |
| 3 | 140,000 | 200 | 100 | 14 | 13 |
| 4 | 80,000 | 1500 | 1000 | 14 | 13 |
| 5 | 80,000 | 500 | 0 | 14 | 13 |

### Conclusions:

Results of the tests in gas mixture 1 are shown in Figures 4 to 6. AuPd continues to show excellent H₂ oxidation performance while producing minimal N₂O.

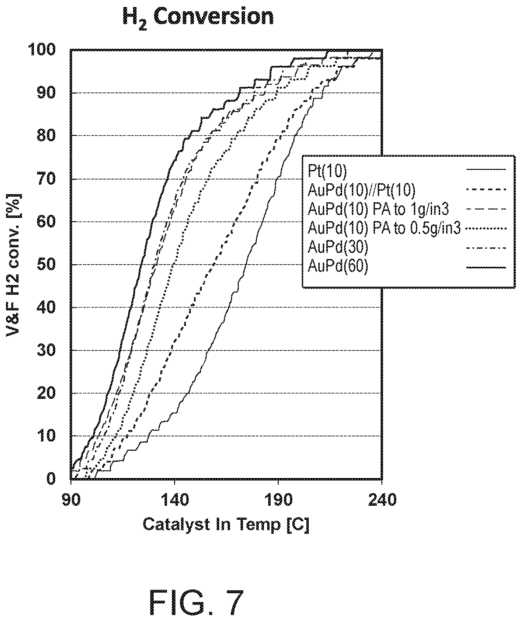

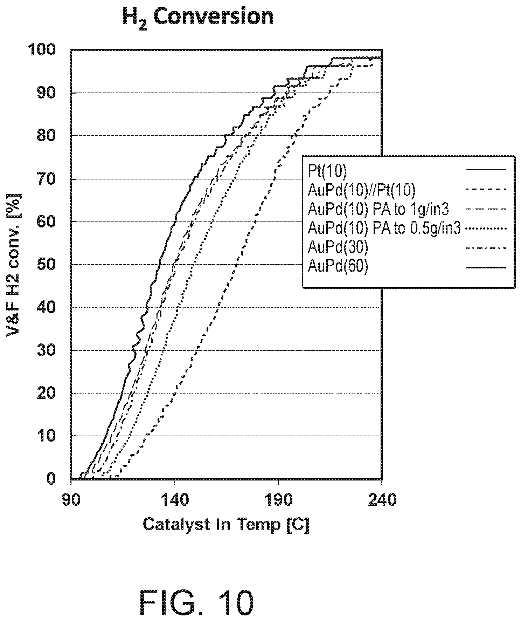

Results for tests in gas mixture 2 having a SV of 80,000 are shown in Figures 7 to 9. Results for tests at in gas mixture 3 for the SV of 140,000 are shown in Figures 10 to 12. The highest H₂ conversion was achieved by Au:Pd at 2.19 g/L (60g/ft³). Again, this produced negligible quantities of N₂O. At 0.353 g/L (10g/ft³), all T₅₀ (the temperature at which the catalyst catalyses the conversion of the relevant reaction at 50% efficiency, also known as a "light-off" temperature) were within 10°C, however the Pt-only catalyst composition was slightly better for light-off than the Au:Pd catalyst compositions. All Au:Pd catalysts produced substantially no N₂O.

Reducing hydrogen concentrations to 200ppm made a significant difference in the relative result rankings. The Pt-only catalyst had a poorer H₂ light off than all 5x gold-containing formulations. There is also very little difference between 0.353 g/L (10g/ft³) and 2.19 g/L (60g/ft³) Au:Pd catalyst compositions suggesting for lower H₂ levels there is no significant benefit to having higher Au:Pd catalyst loadings.

### Example 3 - Effect of Au:Pd Ratio

A range of different dry, pre-formed powder Au:Pd weight ratios of 1:0, 3:1, 2:1, 1.25:1 and 1:2 but all having the same total precious metal loading was prepared according to the methods or adaptations of the methods described in Example 1. The resulting powders were washcoated onto individual flow-through monolith substrates and dried and calcined as also described in Example 1. A similarly loaded Pt-only catalysed monolith substrate was prepared as a reference. Cores were cut from the calcined substrates and the cores were hydrothermally aged at 650°C for 50 hours, also as described in Example 1. Coated, aged monolith substrate cores were then tested in a simulated exhaust gas mixture described in Example 1, wherein the H₂ and NO component concentrations and swept volume conditions tested were as for gas mixtures 1, 2, 4 and 5 set out in Table 2 above.

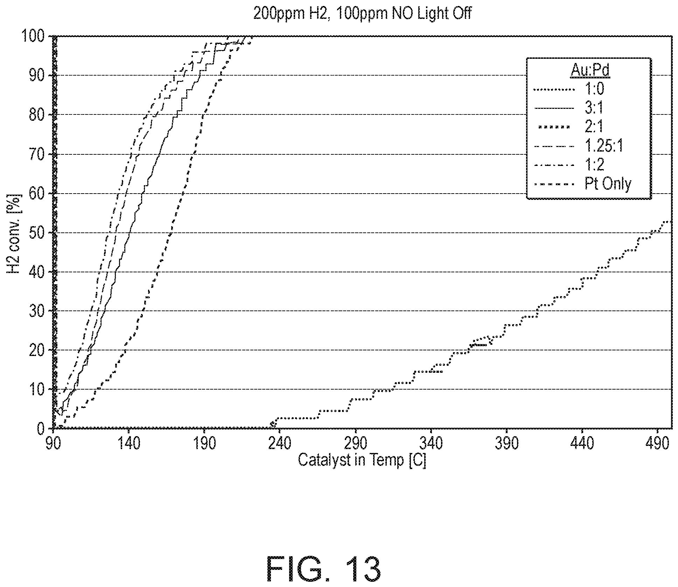

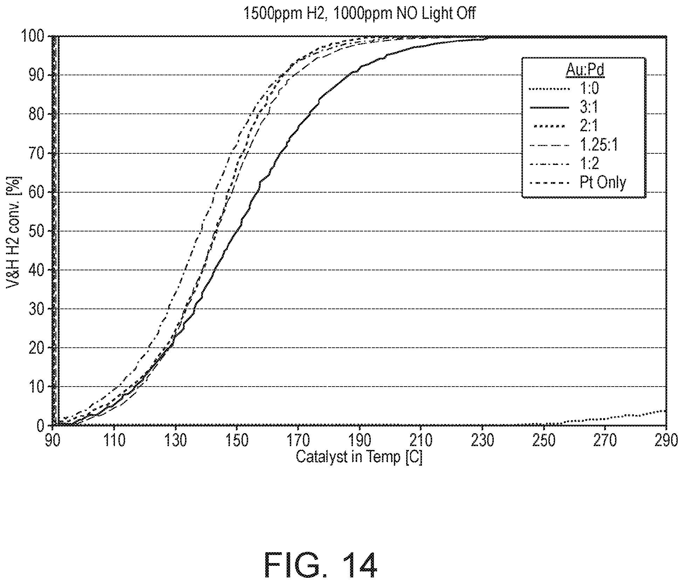

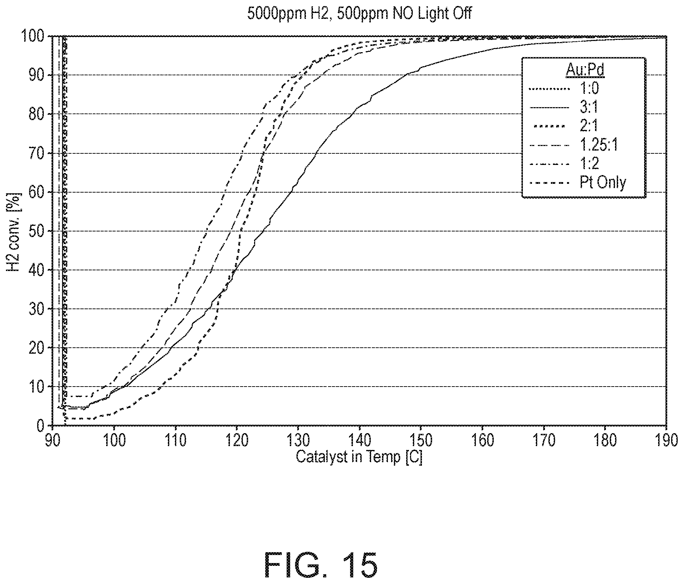

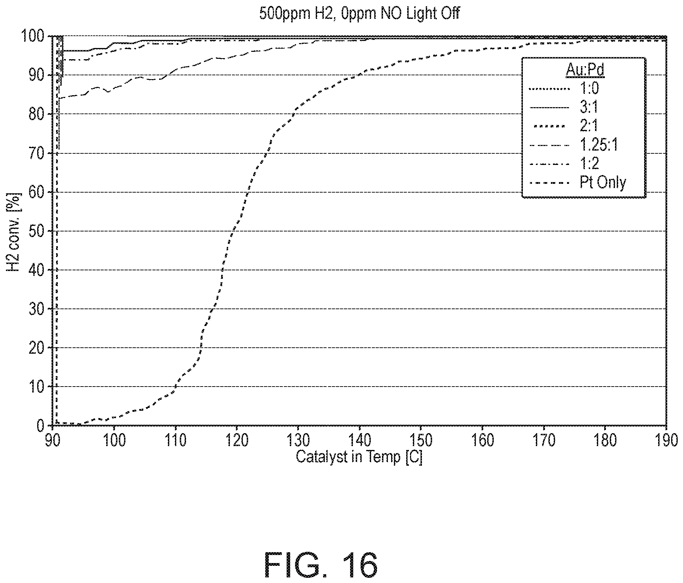

The H₂ oxidation activity results are shown in Figures 13 to 16. The results show that the formulations with Au and Pd perform much better than the Au-only formulation for these tests. Rather surprisingly, the Pd rich Au:Pd formulations perform slightly better than the Au rich Au:Pd formulations for the three gas mixtures including NO that were tested. Hence, Pd-rich Au:Pd formulations are preferred.

## Claims

1. An apparatus comprising an internal combustion engine configured to run on a mixture of air and fuel, wherein the fuel of the mixture of air and fuel is a gaseous fuel comprising at least 95 vol% H₂, a source of gaseous fuel comprising at least 95 vol% H₂ and an exhaust system comprising a catalytic aftertreatment component, wherein the catalytic aftertreatment component comprises a catalyst composition comprising palladium and gold on a metal oxide support.

2. The apparatus of claim 1, wherein at least some of the palladium and gold is present as an alloy.

3. The apparatus of claims 1 or 2, wherein the palladium and gold are present in the catalyst composition in a weight ratio of Au:Pd of from 9:1 to 1:9, from 5:1 to 1:5, from 3:1 to 1:3, from 4: 1 to 1:2, from 3:1 to 1:2, or from 2: 1 to 1:2, preferably from 1:1.1 to 1:9, from 1: 1.1 to 1:5, from 1:1.1 to 1:3, or from 1:1.1 to 1:2.

4. The apparatus according to any one of the preceding claims, wherein Au and Pd are present in the catalyst composition in a combined amount of from 0.5 to 10.0 wt%, or from 1.0 to 5.0 wt%.

5. The apparatus according to any one of the preceding claims, wherein the catalyst composition comprises platinum.

6. The apparatus according to claim 5, wherein the catalyst composition comprises platinum located on a separate and distinct metal oxide support from the palladium and gold.

7. The apparatus according to claim 6, wherein the metal oxide support containing platinum also contains palladium.

8. The apparatus according to claim 6 or 7, according to one of the following arrangements:
(i) wherein the gold and palladium on a first metal oxide support and the platinum and optional palladium on a second metal oxide support are disposed in a same washcoat layer;
(ii) wherein the platinum and optional palladium on a second metal oxide support is disposed in a layer under an overlayer comprising the palladium and gold on a first metal oxide support;
(iii) wherein the catalytic aftertreatment component comprises a substrate monolith having an upstream zone and a downstream zone, relative to a flow of exhaust gas, wherein the platinum and optional palladium on a second metal oxide support is located in the upstream zone and the gold and palladium on a first metal oxide support is located in the downstream zone.
(iv) wherein the catalytic aftertreatment component comprises a substrate monolith having an upstream zone and a downstream zone, relative to a flow of exhaust gas, wherein the platinum and optional palladium on a second metal oxide support is located in the downstream zone and the gold and palladium on a first metal oxide support is located in the upstream zone.

9. The apparatus according to claim 8, wherein the substrate monolith is a flow-through substrate or a wall-flow filter.

10. The apparatus according to any one of the preceding claims, wherein the exhaust system comprises a catalyst for selectively reducing NO and NO₂ to N₂ disposed downstream from the catalytic aftertreatment component, an injector for injecting a nitrogenous reductant into exhaust gas between the catalytic aftertreatment component and the catalyst for selectively reducing NO and NO₂ to N₂ and a reservoir of nitrogenous reductant.

11. The apparatus according to claim 10, wherein the exhaust system comprises an ammonia slip catalyst disposed downstream from the catalyst for selectively reducing NO and NO₂ to N₂.

12. The apparatus according to claim 10, wherein the exhaust system comprises a filter for filtering ash derived from engine oil from the exhaust gas, optionally disposed between the catalytic aftertreatment component and the injector for injecting a nitrogenous reductant into exhaust gas.

13. A method of converting hydrogen to H₂O and optionally also NO to NO₂ in exhaust gas from an internal combustion engine running on a mixture of air and fuel, wherein the fuel in the mixture of air and fuel comprises at least 95 vol% H₂, which method comprising passing exhaust gas from the engine through a hydrogen oxidation catalyst comprising palladium and gold on a metal oxide support.

14. A method according to claim 13, wherein exhaust gas containing a mixture of NO and NO₂ derived from oxidation of NO is mixed with a nitrogenous reductant and passed over a catalyst for selectively reducing NO and NO₂ to N₂.

15. A method according to claim 14, wherein the nitrogenous reductant is ammonia (NH₃), optionally derived from a urea ammonia precursor.

## Patentansprüche

1. Einrichtung, umfassend einen Verbrennungsmotor, der konfiguriert ist, um mit einem Gemisch aus Luft und Kraftstoff zu laufen, wobei der Kraftstoff des Gemischs aus Luft und Kraftstoff ein gasförmiger Kraftstoff ist, umfassend zu mindestens 95 Vol.-% H₂, eine Quelle gasförmigen Kraftstoffs, umfassend zu mindestens 95 Vol.-% H₂, und ein Abgassystem, umfassend eine Komponente für katalytische Nachbehandlung, wobei die Komponente für katalytische Nachbehandlung eine Katalysatorzusammensetzung, umfassend Palladium und Gold auf einem Metalloxidträger, umfasst.

2. Einrichtung nach Anspruch 1, wobei mindestens einiges von dem Palladium und dem Gold als eine Legierung vorhanden ist.

3. Einrichtung nach Anspruch 1 oder 2, wobei das Palladium und das Gold in der Katalysatorzusammensetzung in einem Gewichtsverhältnis Au:Pd von 9 : 1 bis 1 : 9, von 5 : 1 bis 1 : 5, von 3 : 1 bis 1 : 3, von 4 : 1 bis 1 : 2, von 3 : 1 bis 1 : 2 oder von 2 : 1 bis 1 : 2, vorzugsweise von 1 : 1,1 bis 1 : 9, von 1 : 1,1 bis 1 : 5, von 1 : 1,1 bis 1 : 3 oder von 1 : 1,1 bis 1 : 2, vorhanden sind.

4. Einrichtung nach einem der vorstehenden Ansprüche, wobei Au und Pd in der Katalysatorzusammensetzung in einer kombinierten Menge von zu 0,5 bis 10,0 Gew.-% oder von zu 1,0 bis 5,0 Gew.-% vorhanden sind.

5. Einrichtung nach einem der vorstehenden Ansprüche, wobei die Katalysatorzusammensetzung Platin umfasst.

6. Einrichtung nach Anspruch 5, wobei die Katalysatorzusammensetzung Platin, das sich auf einem von dem Palladium und dem Gold getrennten und unterschiedlichen Metalloxidträger befindet, umfasst.

7. Einrichtung nach Anspruch 6, wobei der Metalloxidträger, der Platin enthält, ebenso Palladium enthält.

8. Einrichtung nach Anspruch 6 oder 7, gemäß eines der folgenden Arrangements:
(i) wobei das Gold und das Palladium auf einem ersten Metalloxidträger und das Platin und das optionale Palladium auf einem zweiten Metalloxidträger in einerselben Washcoat-Schicht angeordnet sind;
(ii) wobei das Platin und das optionale Palladium auf einem zweiten Metalloxidträger in einer Schicht unter einer Deckschicht angeordnet ist, umfassend das Palladium und das Gold auf einem ersten Metalloxidträger;
(iii) wobei die Komponente für katalytische Nachbehandlung einen Substratmonolithen, der eine stromaufwärtige Zone und eine stromabwärtige Zone relativ zu einem Abgasstrom aufweist, umfasst, wobei sich das Platin und das optionale Palladium auf einem zweiten Metalloxidträger in der stromaufwärtigen Zone befindet und sich das Gold und das Palladium auf einem ersten Metalloxidträger in der stromabwärtigen Zone befindet.
(iv) wobei die Komponente für katalytische Nachbehandlung einen Substratmonolithen, der eine stromaufwärtige Zone und eine stromabwärtige Zone relativ zu einem Abgasstrom aufweist, umfasst, wobei sich das Platin und das optionale Palladium auf einem zweiten Metalloxidträger in der stromabwärtigen Zone befindet und sich das Gold und das Palladium auf einem ersten Metalloxidträger in der stromaufwärtigen Zone befindet.

9. Einrichtung nach Anspruch 8, wobei der Substratmonolith ein Durchströmsubstrat oder ein Wandstromfilter ist.

10. Einrichtung nach einem der vorstehenden Ansprüche, wobei das Abgassystem einen Katalysator zum wahlweise Reduzieren von NO und NO₂ zu N₂, der stromabwärts von der Komponente für katalytische Nachbehandlung angeordnet ist, eine Einspritzdüse zum Einspritzen eines stickstoffhaltigen Reduktionsmittels in das Abgas zwischen der Komponente für katalytische Nachbehandlung und dem Katalysator zum wahlweise Reduzieren von NO und NO₂ zu N₂ und ein Reservoir mit stickstoffhaltigem Reduktionsmittel umfasst.

11. Einrichtung nach Anspruch 10, wobei das Abgassystem einen Ammoniakschlupfkatalysator, der stromabwärts von dem Katalysator zum wahlweise Reduzieren von NO und NO₂ zu N₂ angeordnet ist, umfasst.

12. Einrichtung nach Anspruch 10, wobei das Abgassystem einen Filter zum Filtern von Asche, die aus Motoröl stammt, aus dem Abgas, der optional zwischen der Komponente für katalytische Nachbehandlung und der Einspritzdüse zum Einspritzen eines stickstoffhaltigen Reduktionsmittels in das Abgas angeordnet ist, umfasst.

13. Verfahren zum Umwandeln von Wasserstoff in H₂O und optional ebenso NO in NO₂ in Abgas aus einem Verbrennungsmotor, der mit einem Gemisch aus Luft und Kraftstoff läuft, wobei der Kraftstoff in dem Gemisch aus Luft und Kraftstoff zu mindestens 95 Vol.-% H₂ umfasst, das Verfahren umfassend ein Durchleiten von Abgas aus dem Motor durch einen Wasserstoffoxidationskatalysator, umfassend Palladium und Gold auf einem Metalloxidträger.

14. Verfahren nach Anspruch 13, wobei das Abgas, das ein Gemisch aus NO und NO₂, das aus Oxidation von NO stammt, enthält, mit einem stickstoffhaltigen Reduktionsmittel gemischt und über einen Katalysator zum wahlweise Reduzieren von NO und NO₂ zu N₂ geleitet wird.

15. Verfahren nach Anspruch 14, wobei das stickstoffhaltige Reduktionsmittel Ammoniak (NH₃) ist, optional stammend von einem Harnstoffammoniakvorläufer.

## Revendications

1. Appareil comprenant un moteur à combustion interne configuré pour fonctionner avec un mélange d'air et de carburant, dans lequel le carburant du mélange d'air et de carburant est un carburant gazeux comprenant au moins 95 % en volume de H₂, une source de carburant gazeux comprenant au moins 95 % en volume de H₂ et un système d'échappement comprenant un composant de post-traitement catalytique, dans lequel le composant de post-traitement catalytique comprend une composition de catalyseur comprenant du palladium et de l'or sur un support d'oxyde métallique.

2. Appareil selon la revendication 1, dans lequel au moins une partie du palladium et de l'or est présente sous forme d'alliage.

3. Appareil selon les revendications 1 ou 2, dans lequel le palladium et l'or sont présents dans la composition catalytique dans un rapport en poids Au:Pd de 9:1 à 1:9, de 5:1 à 1:5, de 3:1 à 1:3, de 4:1 à 1:2, de 3:1 à 1:2, ou de 2:1 à 1:2, de préférence de 1:1.1 à 1:9, de 1:1.1 à 1:5, de 1:1.1 à 1:3, ou de 1:1.1 à 1:2.

4. Appareil selon l'une quelconque des revendications précédentes, dans lequel Au et Pd sont présents dans la composition catalytique dans une quantité combinée de 0,5 à 10,0 % en poids, ou de 1,0 à 5,0 % en poids.

5. Appareil selon l'une quelconque des revendications précédentes, dans lequel la composition catalytique comprend du platine.

6. Appareil selon la revendication 5, dans lequel la composition catalytique comprend du platine situé sur un support d'oxyde métallique séparé et distinct du palladium et de l'or.

7. Appareil selon la revendication 6, dans lequel le support d'oxyde métallique contenant du platine contient également du palladium.

8. Appareil selon la revendication 6 ou 7, selon l'un des agencements suivants :
(i) dans lequel l'or et le palladium sur un premier support d'oxyde métallique et le platine et le palladium optionnel sur un second support d'oxyde métallique sont disposés dans une même couche d'imprégnation ;
(ii) dans lequel le platine et le palladium optionnel sur un second support d'oxyde métallique sont disposés dans une couche sous une surcouche comprenant le palladium et l'or sur un premier support d'oxyde métallique ;
(iii) dans lequel le composant de post-traitement catalytique comprend un monolithe de substrat ayant une zone en amont et une zone en aval, par rapport à un flux de gaz d'échappement, dans lequel le platine et le palladium optionnel sur un second support d'oxyde métallique sont situés dans la zone en amont et l'or et le palladium sur un premier support d'oxyde métallique sont situés dans la zone en aval.
(iv) dans lequel le composant de post-traitement catalytique comprend un monolithe de substrat ayant une zone en amont et une zone en aval, par rapport à un flux de gaz d'échappement, dans lequel le platine et le palladium optionnel sur un second support d'oxyde métallique sont situés dans la zone en aval et l'or et le palladium sur un premier support d'oxyde métallique sont situés dans la zone en amont.

9. Appareil selon la revendication 8, dans lequel le monolithe de substrat est un substrat à écoulement traversant ou un filtre à parois poreuses.

10. Appareil selon l'une quelconque des revendications précédentes, dans lequel le système d'échappement comprend un catalyseur pour la réduction sélective de NO et NO₂ en N₂ disposé en aval du composant de post-traitement catalytique, un injecteur pour l'injection d'un réducteur azoté dans le gaz d'échappement entre le composant de post-traitement catalytique et le catalyseur pour la réduction sélective de NO et NO₂ en N₂, ainsi qu'un réservoir de réducteur azoté.

11. Appareil selon la revendication 10, dans lequel le système d'échappement comprend un catalyseur de glissement d'ammoniac disposé en aval du catalyseur pour la réduction sélective de NO et NO₂ en N₂.

12. Appareil selon la revendication 10, dans lequel le système d'échappement comprend un filtre pour filtrer les cendres dérivées de l'huile moteur du gaz d'échappement, éventuellement disposé entre le composant de post-traitement catalytique et l'injecteur pour injecter un réducteur azoté dans le gaz d'échappement.

13. Procédé de conversion de l'hydrogène en H₂O et éventuellement de NO en NO₂ dans le gaz d'échappement d'un moteur à combustion interne fonctionnant avec un mélange d'air et de carburant, dans lequel le carburant dans le mélange d'air et de carburant comprend au moins 95 % en volume de H₂, lequel procédé consistant à faire passer le gaz d'échappement du moteur à travers un catalyseur d'oxydation de l'hydrogène comprenant du palladium et de l'or sur un support d'oxyde métallique.

14. Procédé selon la revendication 13, dans lequel le gaz d'échappement contenant un mélange de NO et de NO₂ dérivé de l'oxydation du NO est mélangé à un réducteur azoté et passe sur un catalyseur pour la réduction sélective de NO et NO₂ en N₂.

15. Procédé selon la revendication 14, dans lequel le réducteur azoté est l'ammoniac (NH₃), éventuellement dérivé d'un précurseur d'urée ammoniacale.
